# EUROPÄISCHE PATENTSCHRIFT

(11) **EP 3 372 122 B1**
(45) Veröffentlichungstag und Bekanntmachung des Hinweises auf die Patenterteilung: **15.04.2020**
(21) Anmeldenummer: 17160245.1
(22) Anmeldetag: 10.03.2017
(51) Int. Cl.: A47J 31/06

(54) **ADAPTER ZUR VERWENDUNG BEI DER ZUBEREITUNG EINES GETRÄNKES**
ADAPTER FOR USE IN THE PREPARATION OF A BEVERAGE
ADAPTATEUR À UTILISER LORS DE LA PRÉPARATION D'UNE BOISSON

(43) Veröffentlichungstag der Anmeldung: 12.09.2018
(73) Patentinhaber: Delica AG, 4127 Birsfelden (CH)
(72) Erfinder: Affolter, Roland, CH-5103 Möriken (CH); Thilla, Tim, DE-79576 Weil am Rhein (DE); Brönnimann, Markus, CH-3274 Hermrigen (CH)
(74) Vertreter: Hepp Wenger Ryffel AG

(56) Entgegenhaltungen:
- WO-A1-2010/066705
- WO-A1-2011/058329
- WO-A1-2011/069830
- WO-A1-2011/092301
- WO-A1-2013/117990
- WO-A1-2013/153526

## Beschreibung

Die vorliegende Erfindung betrifft einen Adapter und eine Kapsel zur Verwendung bei der Zubereitung eines Getränkes mit einer Getränkezubereitungsvorrichtung, wobei der Adapter gemeinsam mit der Kapsel in die Getränkezubereitungsvorrichtung einlegbar ist.

Im Stand der Technik sind eine Vielzahl von unterschiedlichen Portionsverpackungen und Systemen zur Herstellung von Getränken bekannt. Insbesondere Kapseln werden häufig zur Zubereitung von unterschiedlichen Heissgetränken, allen voran Kaffee oder Tee, aber auch von Milch-Mischgetränken, im Heimgebrauch eingesetzt. Üblicherweise umfassen solche Kapseln, die als Einwegprodukte konzipiert sind, einen Kapselkörper zur Aufnahme der Getränkezutaten sowie einen den Kapselkörper abdeckenden Deckel. Bei den Zutaten handelt es sich meist um geröstete und gemahlene Kaffeebohnen, teilweise aber auch um getrocknete Teeblätter. Allerdings kommen auch lösliche Produkte im Allgemeinen oder Konzentrate in Frage. Bei der eigentlichen Zubereitung wird unter Druck stehendes Wasser durch die Kapsel geleitet, wodurch es zu einer Extraktion bzw. zu einem Auflösen des in der Kammer enthaltenen Materiales kommt.

In jüngerer Zeit hat die Anzahl kommerziell erhältlicher Getränkezubereitungssysteme, welche auf Kapseln der oben genannten Art basieren, signifikant zugenommen. Dabei umfasst jedes der Systeme in der Regel Kapseln verschiedener Gestalt und Grösse. Um es einem Benutzer zu ermöglichen, eine Kapsel eines Systems mit einer Getränkezubereitungsvorrichtung eines anderen Systems zu verwenden, sind zudem verschiedene Adapter erhältlich. So beschreibt beispielsweise die EP 2 401 945 A1 eine Adaptervorrichtung für eine Getränkezubereitungsvorrichtung. Die besagte Adaptervorrichtung stellt einen Aufnahmeraum bereit, der an die Aussenkontur einer Kapsel angepasst ist, und in welche diese eingelegt werden kann. Nachdem der Aufnahmeraum mit einem Deckel verschlossen wurde, ist die Adaptervorrichtung mit der Kapsel in einen Kapselhalter der Getränkezubereitungsvorrichtung einlegbar, der für eine Kapsel eines anderen Typs ausgelegt ist. Die Adaptervorrichtung stellt Mittel zum Einleiten einer Flüssigkeit in die Kapsel sowie Mittel zum Ableiten einer Flüssigkeit aus der Kapsel bereit, welche mit denjenigen der Getränkezubereitungsvorrichtung korrespondieren. Diese Adaptervorrichtung stellt eine Möglichkeit bereit, um eine Kapsel mit Getränkezubereitungsvorrichtungen unterschiedlicher Systeme zu verwenden. Allerdings hat die besagte Adaptervorrichtung den Nachteil, dass sie aufgrund der Tatsache, dass die Kapsel vollständig umschlossen wird, mehrteilig ausgeführt sein muss. Des Weiteren führt die Vorrichtung zu einer verhältnismässig grossen Reduktion des verfügbaren Volumens des Kapselhalters. Auch ist sie nur in Kombination mit einem einzelnen Kapseltyp einsetzbar, da die Aufnahme exakt an die Aussenkontur der Kapsel angepasst ist. Nicht zuletzt ist die Verwendung einer derartigen Adaptervorrichtung umständlich, da der Benutzer nach erfolgter Getränkezubereitung die Adaptervorrichtung öffnen muss, um die Kapsel aus deren Aufnahme zu entfernen.

Eine ähnliche Adaptervorrichtung beschreibt die WO 2013/153526 A1. Es ist daher eine Aufgabe der vorliegenden Erfindung, die oben genannten Nachteile im Stand der Technik zu überwinden. Insbesondere ist es eine Aufgabe der vorliegenden Erfindung einen vielfältig anwendbaren Adapter zur Verwendung bei der Zubereitung eines Getränkes mit einer Kapsel und einer Getränkezubereitungsvorrichtung zu schaffen, der einfacher zu fertigen und anzuwenden ist. Der Adapter soll insbesondere eine grössere Benutzerfreundlichkeit bieten und erforderlichenfalls auch in Verbindung mit verschiedenen Kapseln unterschiedlicher Grösse und/oder unterschiedlichen Typs einsetzbar sein.

Diese Aufgaben werden einerseits durch einen Adapter gelöst, welcher die Merkmale in Anspruch 1 aufweist. Der besagte Adapter ist zur Verwendung bei der Zubereitung eines Getränkes mit einer Kapsel und einer Getränkezubereitungsvorrichtung geeignet, wobei der Adapter gemeinsam mit der Kapsel in die Getränkezubereitungsvorrichtung einlegbar ist. Der Adapter weist eine Kapselseite auf, an welcher Mittel zum Einleiten einer Flüssigkeit in die Kapsel sowie Mittel zum Ableiten einer Flüssigkeit aus der Kapsel angeordnet sind. Der Adapter weist darüber hinaus eine Vorrichtungsseite auf, an welcher ein Einlass für eine von der Getränkezubereitungsvorrichtung bereitgestellte Flüssigkeit sowie ein Auslass angeordnet sind. Der Einlass ist mit den Mitteln zum Einleiten der Flüssigkeit in die Kapsel und der Auslass mit den Mitteln zum Ableiten der Flüssigkeit aus der Kapsel jeweils fluidmässig verbunden.

Der Besagte Adapter hat den Vorteil, dass sowohl das Einleiten der Flüssigkeit in die Kapsel als auch das Ableiten derselben aus der Kapsel an nur einer Seite der Kapsel erfolgen. Dadurch muss der Adapter die Kapsel nicht vollständig umschliessen und kann konstruktiv deutlich einfacher ausgeführt sein. Ein aufwändiges Einlegen der Kapsel in den Adapter und späteres Entfernen derselben aus diesem entfällt. Darüber hinaus ist es möglich, innerhalb gewisser Grenzen Kapseln unterschiedlicher Grösse und Gestalt mit ein und demselben Adapter zu verwenden, da die Grösse und Form der Kapsel durch diesen nicht fest vorgegeben sind. Dies ermöglicht es unter anderem, die Menge einer mit einer Kapsel eingesetzten Ausgangssubstanz zur Zubereitung eines Getränkes der jeweiligen Rezeptur anzupassen.

Der Adapter kann eine im Wesentlichen scheibenförmige Form haben.

Die Kapselseite kann einen Einleitbereich, in welchem die Mittel zum Einleiten der Flüssigkeit in die Kapsel angeordnet sind, und/oder einen Ableitbereich, in welchem die Mittel zum Ableiten der Flüssigkeit aus der Kapsel angeordnet sind, aufweisen. Der Einleitbereich und/oder der Ableitbereich können durch zumindest ein Dichtungselement begrenzt sein, durch welches mit einer Kontaktfläche der Kapsel zumindest eine Dichtverbindung herstellbar ist. Dadurch kann ein unbeabsichtigtes Austreten von Flüssigkeit am Übergang vom Adapter zur Kapsel während der Getränkeherstellung wirkungsvoll vermieden werden. Insbesondere können der Einleitbereich und der Ableitbereich durch zumindest ein Dichtungselement voneinander getrennt sein, durch welches mit der Kontaktfläche der Kapsel eine Dichtverbindung herstellbar ist. Dadurch kann ein unerwünschtes Überströmen von Flüssigkeit vom Einleitbereich in den Ableitbereich, ohne diese Kapsel zu passieren, wirkungsvoll vermieden werden.

Der Adapter kann, gegebenenfalls einschliesslich des Dichtungselementes, einstückig, zweistückig oder auch dreistückig, insbesondere durch Spritzguss, vorzugsweise aus einem Kunststoffmaterial, hergestellt sein. Durch die einstückige Ausführung wird die konstruktive Komplexität des Adapters weiter reduziert, wodurch dieser kostengünstiger hergestellt werden kann. Insbesondere Spritzguss ist dabei sehr gut zur Massenproduktion geeignet.

Die Mittel zum Einleiten der Flüssigkeit in die Kapsel können als zumindest ein Penetrationselement zum Penetrieren der Kontaktfläche der Kapsel ausgebildet sein. Dadurch kann ein Flüssigkeitspfad in die Kapsel auf zuverlässige Weise hergestellt werden. Insbesondere können die Mittel zum Einleiten der Flüssigkeit in die Kapsel als zumindest eine Hohlkanüle ausgebildet sein. Eine solche ist besonders gut zum Einleiten einer Flüssigkeit in die Kapsel geeignet, da nach Penetrieren der Kontaktfläche die Flüssigkeit durch die Hohlkanüle ins Innere der Kapsel leitbar ist. Allerdings kann das zumindest eine Penetrationselement auch ausgewählt sein aus einer Liste bestehend aus einer Pyramide, einem Kegel, einem Pyramidenstumpf, einem Kegelstumpf, einem Zylinder und einem Prisma.

Das zumindest eine Penetrationselement kann derart ausgebildet sein, dass die Kontaktfläche der Kapsel beim Einlegen der Kapsel und des Adapters in die Getränkezubereitungsvorrichtung und Verschliessen der Vorrichtung mit dem zumindest einen Penetrationselement penetrierbar ist. Dadurch kann die Penetration der Kontaktfläche für den Benutzer erleichtert werden, da diese unter der Verwendung der Getränkezubereitungsvorrichtung beim Schliessen des eigentlichen Kapselhalters erfolgen kann. Darüber hinaus wird die Kapsel erst unmittelbar vor der Getränkezubereitung geöffnet, was eine Kontamination oder ein Auslaufen deren Inhalts wirkungsvoll vermeidet.

Die Mittel zum Ableiten der Flüssigkeit aus der Kapsel können als zumindest ein, vorzugsweise mehrere, Penetrationselement/e, insbesondere ausgewählt aus einer Liste bestehend aus Pyramiden, Kegeln, Pyramidenstümpfen, Kegelstümpfen, Zylindern und Prismen, zum Penetrieren der Kontaktfläche der Kapsel ausgebildet sein. Derartige Penetrationselemente stellen ein wirkungsvolles Mittel zum Penetrieren der Kontaktfläche, und damit zum Herstellen eines Flüssigkeitspfades zum Ableiten der Flüssigkeit aus der Kapsel, dar. Werden mehrere Penetrationselemente eingesetzt, kann die Kontaktfläche an mehreren Stellen penetriert werden. Es wurde festgestellt, dass durch die mehrfache Penetration der Kontaktfläche die unerwünschte Bildung von bevorzugten Flüssigkeitspfaden innerhalb der Ausgangssubstanz im Inneren der Kapsel (sogenanntes Channeling) vermieden werden kann. Dadurch kann eine gute Perkolation der in der Kapsel enthaltenen Ausgangssubstanz gewährleistet werden.

Die Mittel zum Ableiten der Flüssigkeit aus der Kapsel können, insbesondere zusätzlich, als zumindest ein, vorzugsweise mehrere, Stützelement/e, insbesondere ausgewählt aus einer Liste bestehend aus Pyramiden, Kegeln, Pyramidenstümpfen, Kegelstümpfen, Zylindern und Prismen, ausgebildet sein. Das zumindest eine Stützelement kann derart ausgebildet sein, dass die Kontaktfläche der Kapsel nach dem Einlegen derselben und des Adapters in die Getränkezubereitungsvorrichtung auf dem Stützelement aufliegt. Durch einen während einer Getränkezubereitung aufgebauten Kapselinnendruck ist die Kontaktfläche dann, insbesondere zusätzlich zu einer Penetration beim Schliessen einer Getränkezubereitungsvorrichtung, zum Bersten bringbar. Auf diese Weise kann insbesondere bei Kaffeegetränken besonders hohe Qualität erzielt werden, da erst die Flüssigkeit in die Kapsel eingeleitet wird und die Ausgangssubstanz unter Komprimierung der in der Kapsel enthaltenen Luft benetzt wird, bevor ein Flüssigkeitspfad zum Ableiten der Flüssigkeit aus der Kapsel geschaffen wird. Darüber hinaus kann die geborstene, und optional zusätzlich auch penetrierte, Kontaktfläche ebenfalls die Funktion eines Filterelementes übernehmen.

Die Mittel zum Ableiten der Flüssigkeit aus der Kapsel, der Auslass und gegebenenfalls auch der Ableitbereich können im Zentrum des Adapters angeordnet sein. Dies ermöglicht es, dass je nach Ausführung der Getränkezubereitungsmaschine, ein Auffanggefäss für das zubereitete Getränk, beispielsweise eine Kaffeetasse, mittig zentriert direkt unterhalb des Adapters und der Kapsel aufgestellt werden kann.

Die Mittel zum Einleiten der Flüssigkeit in die Kapsel, der Einlass und gegebenenfalls auch der Einleitbereich können in einem Randbereich des Adapters angeordnet sein. Bevorzugt sind die Mittel zum Einleiten einer Flüssigkeit in die Kapsel dabei als ein insbesondere umlaufender Kanal oder eine Rinne ausgebildet. Dadurch kann das Zentrum des Adapters für andere Teile freigehalten werden. Darüber hinaus kann beim Einsatz von beispielsweise mehreren Einstechkanülen eine bessere Verteilung der Flüssigkeit über die in der Kapsel enthaltene Ausgangssubstanz erzielt werden.

Die Kapselseite des Adapters kann eine Struktur zum Festhalten und/oder Positionieren der Kapsel aufweisen. Diese Struktur kann in Form eines umlaufenden Kragens ausgestaltet sein. Eine derartige Struktur gewährleistet, dass der Adapter zur Getränkezubereitung richtig auf der Kapsel positioniert ist. Wenn die Struktur zusätzlich auch zum Festhalten der Kapsel ausgebildet ist, können Adapter und Kapsel vor der Getränkezubereitung miteinander verbunden und gemeinsam als Einheit in die Getränkezubereitungsvorrichtung eingelegt werden. Dies vereinfacht die Handhabung des Adapters durch einen Benutzer.

Der Kragen umfasst vorzugsweise eine Einbuchtung zum Eingreifen in eine Aussparung der Kapsel. Dadurch kann auch eine gewünschte gegenseitige Orientierung von Adapter und Kapsel sichergestellt werden.

Die Struktur kann Rastmittel, insbesondere in Form einer Grube und/oder einer Rastnase aufweisen, mit denen die Kapsel, insbesondere an einem flanschartigen Rand, vorzugsweise an einem umlaufenden Kragen, verrastbar ist. Damit kann die Kapsel in einer Bereitschaftsposition gehalten werden, in der die Kontaktfläche der Kapsel unmittelbar vor den oben beschriebenen Penetrationselementen gehalten ist, wobei es erst beim Einlegen der Kapsel und des Adapters in die Getränkezubereitungsvorrichtung und Verschliessen der Vorrichtung zu einer Penetration der Kontaktfläche der Kapsel kommt.

Der Auslauf kann eine Engstelle, insbesondere einen Spalt, zum Aufschäumen einer aus der Kapsel abgeleiteten Flüssigkeit aufweisen. Durch diese Ausgestaltung des Auslaufs kann beim Passieren einer Flüssigkeit eine erhöhte Scherwirkung erzielt werden. Dies erlaubt insbesondere bei der Herstellung von Kaffeegetränken eine verbesserte Crema, wie sie insbesondere bei Getränken von der Art eines Espressos typisch ist. Wenn die Engstelle in Form eines Spaltes ausgeführt ist, kann diese zusätzlich die Funktion eines Ventils wahrnehmen, welches erst unter ansteigendem Flüssigkeitsdruck innerhalb der Kapsel öffnet und damit ein frühzeitiges Austreten des Getränkes verhindert. Dies ermöglicht insbesondere ein Vorbrühen einer Ausgangssubstanz zur Zubereitung eines Kaffeegetränkes. Entsprechend wird mit dem Adapter eine tropfenweise Ausgabe der Flüssigkeit vermieden und lediglich eine kontinuierliche Ausgabe ermöglicht. Insbesondere kann ein Nachtropfen von Flüssigkeit nach erfolgter Getränkezubereitung vermieden werden, wenn die Kapsel gemeinsam mit dem Adapter aus der Getränkezubereitungsvorrichtung entfernt wird.

Die Vorrichtungsseite des Adapters kann zumindest einen maschinenlesbaren Code aufweisen, welcher von einer Getränkezubereitungsvorrichtung, insbesondere zum Einstellen von deren Betriebsparametern, lesbar ist, wenn der Adapter gemeinsam mit der Kapsel in die Getränkezubereitungsvorrichtung eingelegt ist.

Alternativ dazu kann bei einem erfindungsgemässen Adapter auch die Kapselseite zumindest einen maschinenlesbaren Code aufweisen, welcher von einer Getränkezubereitungsvorrichtung, insbesondere zum Einstellen von deren Betriebsparametern, lesbar ist. Zu diesem Zweck kann der Adapter insbesondere zumindest teilweise derart transparent sein, dass der maschinenlesbare Code von der Getränkezubereitungsvorrichtung lesbar ist, wenn der Adapter gemeinsam mit der Kapsel in die Getränkezubereitungsvorrichtung eingelegt ist.

Dadurch kann bei Getränkezubereitungssystemen, welche zum Einstellen der Betriebsparameter einer Getränkezubereitungsvorrichtung auf einen oder mehrere maschinenlesbare Code/s zurückgreifen, trotz der Verwendung eines Adapters eine gewünschte Einstellung der Betriebsparameter Erfolgen. Das Anbringen eines oder mehrerer maschinenlesbaren Codes am Adapter hat darüber hinaus den Vorteil, dass mit einem einzigen Kapseltyp verschiedene Getränkezubereitungsprogramme (d.h. Sets von Betriebsparametern; bspw. für "Espresso"- oder "Lungo"-Kaffee) ausgeführt werden können. Dadurch kann bei der Getränkeherstellung eine grössere Flexibilität erzielt werden. Ferner kann dadurch ein Verschmutzen des maschinenlesbaren Codes, welches möglicherweise dessen Lesbarkeit beeinträchtigt, vermieden werden.

Der maschinenlesbare Code kann ein 1D- oder ein 2D-Code sein. Wenn der Code ein 1D-Code ist, kann dieser ein Strichcode sein. Wenn der Code ein 2D-Code ist, kann dieser ein gestapelter Code, beispielsweise ein Codablock, ein Code 49, oder ein PDF417 sein. In Frage kommen allerdings auch Matrixcodes, wie ein QR-Code, eine Data-Matrix, ein MaxiCode oder ein Aztec-Code. Jedoch kommen auch Punktcodes oder Composite-Codes in Frage. Allerdings sind auch sämtliche weiteren optoelektronisch lesbaren Schriften sowie Farbmarkierungen oder taktile Codierungen zur Verwendung in Kombination mit der vorliegenden Erfindung geeignet.

Alternativ dazu kann der Adapter auch zumindest ein Fenster aufweisen, durch welches ein auf der Kontaktfläche der Kapsel angebrachter maschinenlesbarer Code durch die Getränkezubereitungsvorrichtung, insbesondere zum Einstellen deren Betriebsparameter, lesbar ist, wenn der Adapter gemeinsam mit der Kapsel in die Getränkezubereitungsvorrichtung eingelegt ist. Diese Ausgestaltung des Adapters stellt sicher, dass bei der Verwendung einer Kapsel stets die richtigen Parameter bei der Getränkezubereitungsvorrichtung eingestellt werden, losgelöst von der Art des verwendeten Adapters. Eine Verwechslung, welche die Einstellung von falschen Betriebsparametern bei der Getränkezubereitungsvorrichtung zur Folge haben könnte, wird damit wirkungsvoll vermieden.

Alternativ zu der oben beschriebenen Ausführung kann der Adapter auch zumindest bereichsweise derart transparent ausgebildet sein, dass ein auf der Kontaktfläche der Kapsel angebrachter maschinenlesbarer Code durch die Getränkezubereitungsvorrichtung, insbesondere zum Einstellen von deren Betriebsparametern, lesbar ist, wenn der Adapter gemeinsam mit der Kapsel in die Getränkezubereitungsvorrichtung eingelegt ist.

Der zumindest eine maschinenlesbare Code, das zumindest eine Fenster oder der zumindest eine transparente Bereich kann auf der Vorrichtungsseite derart angeordnet sein, dass eine Linie, die den Einlass mit dem Zentrum des maschinenlesbaren Codes, des Fensters oder des transparenten Bereiches verbindet, und eine Linie, die Einlass mit dem Auslass verbindet, durch einen minimalen Winkelabstand von 70° getrennt sind. Durch einen Winkelabstand des Fensters oder des transparenten Bereiches zum Einlass von grösser oder gleich 70° kann eine Verschmutzung des maschinenlesbaren Codes, das Fensters oder des transparenten Bereiches besonders wirksam vermieden werden.

Die vorliegende Erfindung betrifft darüber hinaus eine Kapsel zur Zubereitung eines Getränkes mit einem Adapter wie oben beschrieben und einer Getränkezubereitungsvorrichtung. Die Kapsel ist gemeinsam mit dem Adapter in die Getränkezubereitungvorrichtung einlegbar. Die Kapsel umfasst einen Kapselkörper mit einem flanschartigen Rand, an welchem ein Deckel angebracht ist, wobei der Deckel die Kontaktfläche der Kapsel bildet und den Kapselkörper, insbesondere hermetisch, verschliesst. Der flanschartige Rand weist einen umlaufenden Kragen auf, welcher sich über die Kontaktfläche hinaus erstreckt.

Diese Ausgestaltung der Kapsel ist insbesondere vorteilhaft, wenn, je nach Ausgestaltung der Dichtungselemente am Adapter, auch am äusseren Rand des Kapselkörpers eine Dichtverbindung mit dem Adapter hergestellt werden muss. Der Erfindung liegt die Erkenntnis zugrunde, dass eine Dichtverbindung zwischen dem Kapselkörper und dem Adapter nicht zuverlässig herstellt werden kann, wenn zwischen den Dichtflächen dieser Teile der Deckel liegt. Entsprechend verfügt die erfindungsgemässe Kapsel am flanschartigen Rand über einen umlaufenden Kragen, welcher sich über die Kontaktfläche - und damit auch über den Deckel - hinaus erstreckt. Damit kann eine zuverlässige Dichtverbindung zwischen dem Adapter und dem umlaufenden Kragen hergestellt werden.

Die vorliegende Erfindung betrifft darüber hinaus ein Set umfassend einen Adapter wie vorgängig beschrieben und mindestens eine Kapsel zur Zubereitung eines Getränkes, insbesondere eine Kapsel wie vorgängig beschrieben. Dabei kann die mindestens eine Kapsel eine Kontaktfläche umfassen, die einen maschinenlesbaren Code aufweist.

Ein derartiges Set bestehend aus Adapter und Kapsel bietet insbesondere den Vorteil, dass die Kapsel deutlich einfacher aufgebaut sein kann als solche, die bei vergleichbaren Anwendungen üblicherweise eingesetzt werden. Dadurch gestalten sich der Prozess und die Anlage zum Abfüllen einer solchen Kapsel mit einer Ausgangssubstanz einfacher. Ferner ist es einfacher, eine derartige Kapsel in sauerstoffdichter Ausführung herzustellen.

Für die Ausgestaltung eines an der Kapsel angebrachten Codes gilt dabei dasselbe wie in Bezug auf einen am Adapter angebrachten Code oben beschriebene.

Die Kapsel kann einen Kapselkörper und einen Deckel umfassen, welcher die Kontaktfläche der Kapsel bildet und den Kapselkörper, insbesondere hermetisch, verschliesst. Der Deckel kann aus einer Verbundstruktur, insbesondere umfassend eine Aluminiumfolie und ein Vlies, gebildet sein. Die Aluminiumfolie verleiht dabei der Verbundstruktur die Dichtigkeit, welche erforderlich ist um den Kapselkörper hermetisch zu verschliessen. Durch den Einsatz eines Vlieses in der Verbundstruktur kann zusätzlich eine Filterfunktion erzielt werden, wenn die Aluminiumfolie penetriert oder geborsten ist. Alternativ zu dieser Verbundstruktur kann auch eine Kunststofffolie eingesetzt werden.

Die Kapsel kann eine Trockensubstanz, insbesondere ein Kaffeepulver, und/oder ein Getränkekonzentrat enthalten. Der Kapselkörper kann aus einem Kunststoffmaterial, insbesondere durch ein Spritzguss- oder Tiefziehverfahren, hergestellt sein. Diese Materialien und Verfahren haben sich zur Herstellung von Kapselkörpern bewährt.

Die Aussenhülle der Kapsel kann sauerstoff- und/oder aromadicht sein. Durch eine sauerstoffdichte Ausführung der Aussenhülle kann ein Eindringen von Sauerstoff in die Kapsel während der Lagerung einer darin enthaltenen Ausgangssubstanz im Wesentlichen vermieden werden. Entsprechend kann ein Altern der Ausgangssubstanz, beispielsweise von Kaffeepulver, durch Oxidation vermieden werden. Eine sauerstoffdichte Kapsel ist in der Regel auch aromadicht. Daher wird ein Austreten von in der Ausgangssubstanz enthaltenen Aromastoffen während der Lagerung derselben innerhalb der Kapsel im Wesentlichen verhindert.

Sauerstoff- und/oder Aromadichtigkeit ist erforderlich, um insbesondere bei Kaffee eine Mindesthaltbarkeit von 12 Monaten, vorzugsweise von 18 Monaten zu erreichen. Entsprechend wird im vorliegenden Zusammenhang unter einer sauerstoff- und/oder aromadichten Kapsel eine Kapsel verstanden, in welcher Kaffeepulver für eine Dauer von mindestens 12 Monaten, vorzugsweise mindestens 18 Monaten, bei Raumtemperatur an Atmosphärenluft lagerbar ist, ohne dass es zu einer Veränderung des Kaffeepulvers kommen würde, welche die Qualität eines daraus hergestellten Kaffeegetränkes signifikant beeinträchtigt.

Der Kapselkörper, bzw. die gesamte Kapsel, kann eine Oberflächenbereinigte Oxygen Transmission Rate (OTR) in der Einheit cm³ pro m² pro Tag pro 0,21 bar von weniger als 20, vorzugsweise weniger als 10, bevorzugterweise weniger als 5, haben. Die OTR gibt an, welche Menge an Sauerstoff pro Flächen- und Zeiteinheit durch den Kapselkörper diffundiert.

Bei einem erfindungsgemässen Set kann der Adapter an der Kapsel vormontiert sein. Dies erhöht die Benutzerfreundlichkeit, da ein Benutzer die vormontierte Einheit aus Adapter und Kapsel lediglich noch die Getränkezubereitungsvorrichtung einlegen muss.

Des Weiteren betrifft die vorliegende Erfindung ein Getränkezubereitungssystem umfassend ein Set wie oben beschrieben sowie eine Getränkezubereitungsvorrichtung. Das Getränkezubereitungssystem kann neben dem Set wie oben beschrieben und der Getränkezubereitungsvorrichtung zusätzlich zumindest eine Kapsel umfassen, welche zum Einsatz ohne Adapter geeignet ist.

Weitere Vorteile und Einzelmerkmale der vorliegenden Erfindung ergeben sich aus der nachfolgenden Beschreibung mehrerer Ausführungsbeispiele und aus den Zeichnungen.

Es zeigen schematisch:
- Figur 1:: Draufsicht auf einen erfindungsgemässen Adapter von der Kapselseite;
- Figur 2:: Draufsicht auf einen erfindungsgemässen Adapter von der Vorrichtungsseite;
- Figur 3:: Perspektivische Darstellung eines erfindungsgemässen Adapters von der Kapselseite;
- Figur 4:: Perspektivische Darstellung eines erfindungsgemässen Adapters von der Vorrichtungsseite;
- Figuren 5 und 6:: Perspektivische Darstellungen des Kapselkörpers einer Kapsel zur Verwendung mit einem erfindungsgemässen Adapter;
- Figur 7:: Perspektivische Darstellung einer Kapsel zur Verwendung mit einem erfindungsgemässen Adapter;
- Figur 8:: Perspektivische Zusammenschau eines erfindungsgemässen Adapters sowie einer für die Verwendung mit diesem vorgesehenen Kapsel;
- Figuren 9 und 10:: Perspektivische Darstellungen eines erfinédungsgemässen Adapters mit darauf aufgesetzter Kapsel;
- Figur 11:: Schnittansicht durch erfindungsgemässen Adapter mit darauf aufgesetzter Kapsel gemäss den Figuren 9 und 10;
- Figur 12:: Vergrösserung des Teilbereichs A aus Figur 11;
- Figur 13:: Alternative Schnittansicht eines erfindungsgemässen Adapters mit darauf aufgesetzter Kapsel gemäss den Figuren 9 und 10;
- Figur 14:: Vergrösserung des Teilbereichs B aus Figur 13;
- Figur 15:: Perspektivische Zusammenschau von erfindungsgemässem Adapter, einer zur Verwendung mit diesem vorgesehenen Kapsel sowie einer Getränkezubereitungsvorrichtung (teilweise dargestellt);
- Figur 16:: Perspektivische Schnittansicht einer Zusammenschau gemäss Figur 15;
- Figuren 17 und 18:: Schnittansichten eines erfindungsgemässen Adapters und einer darauf aufgesetzten Kapsel, eingelegt in eine dafür vorgesehene Getränkezubereitungsvorrichtung (teilweise dargestellt);
- Figuren 19 bis 21:: Verschiedene alternative Ausführungsformen eines erfindungsgemässen Adapters;
- Figur 22:: Perspektivische Schnittansicht eines weiteren Ausführungsbeispiels eines erfindungsgemässen Adapters;
- Figur 23:: Schnittansicht des Adapters gemäss Figur 22 mit darauf aufgesetzter Kapsel;
- Figur 24:: Vergrösserung des Teilbereichs C aus Figur 24;
- Figur 25:: Weitere Schnittansicht von Adapter gemäss Figur 22 mit darauf aufgesetzter Kapsel;
- Figur 26:: Vergrösserung des Teilbereichs D aus Figur 25.

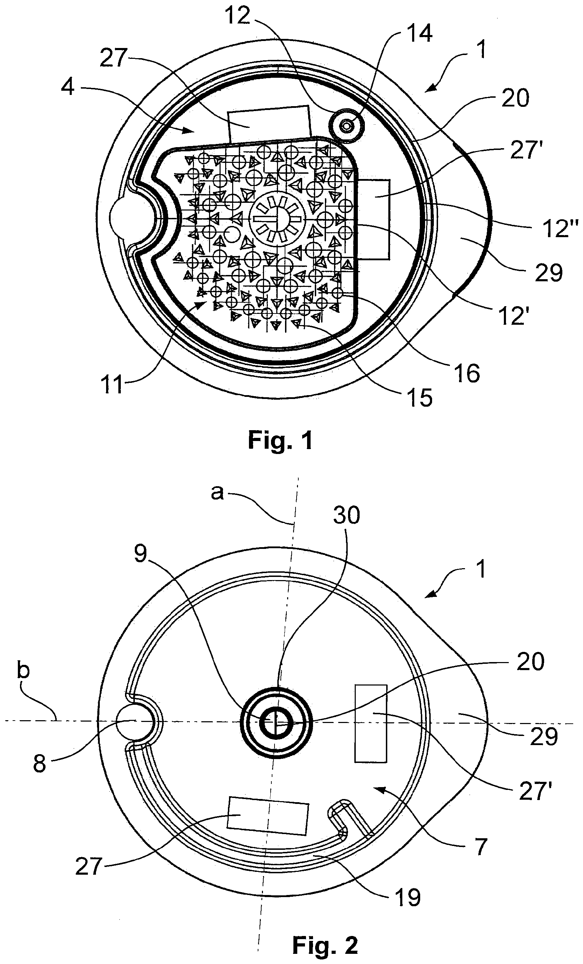

Figur 1 zeigt Einzelheiten zur Kapselseite 4 eines erfindungsgemässen Adapters 1. Es ist zu erkennen, dass der Adapter 1 eine im Wesentlichen kreisrunde Form hat und eine Lasche 29 aufweist. Die Lasche 29 dient einerseits als Griffelement für einen Benutzer und andererseits zur Ausrichtung des Adapters 1 in einer Getränkezubereitungsvorrichtung 3. Die Kapselseite 4 des Adapters 1 weist einen Ableitbereich 11 auf. Der Ableitbereich 11 ist von einem Dichtungselement 12' umsäumt. Ferner ist an der Kapselseite 4 eine Hohlkanüle 14 als Mittel zum Einleiten einer Flüssigkeit in eine Kapsel 2 angeordnet. Die Hohlkanüle 14 ist von einem Dichtungselement 12 umsäumt. Der Ableitbereich 11 weist eine Vielzahl von Penetrationselementen in Form von Dreieckspyramiden 15 auf. Neben diesen Pyramiden 15 sind im Ableitbereich 11 auch Stützelemente in Form von Kegelstümpfen 16 angeordnet. Zum Positionieren einer Kapsel 2 auf dem Adapter 1 weist dieser einen umlaufenden Kragen 20 auf. Ferner sind zwei transparente Bereiche 27, 27' vorhanden, durch welche ein Code auf der Kontaktfläche 13 einer auf den Adapter 1 aufgesetzten Kapsel 2 von der Vorrichtungsseite des Adapters 1 maschinenlesbar ist.

Figur 2 zeigt die Vorrichtungsseite 7 des Adapters 1 mit den transparenten Bereichen 27, 27'. Darüber hinaus ist der Auslass 9 zu erkennen, der von einem umlaufenden Kragen 30 umgeben ist. Der Einlass 8 des Adapters 1 ist in dessen Peripherie angeordnet und mündet in einen Kanal 19, von dem in der vorliegenden Abbildung lediglich die Aussenkontur sichtbar ist. Der transparente Bereich 27 ist derart angeordnet, dass die Linie a, die den Einlass 8 mit dem Zentrum des transparenten Bereiches 27 verbindet, und eine Linie b, die Einlass 8 mit dem Auslass 9 verbindet, durch einen Winkelabstand von 85° getrennt sind.

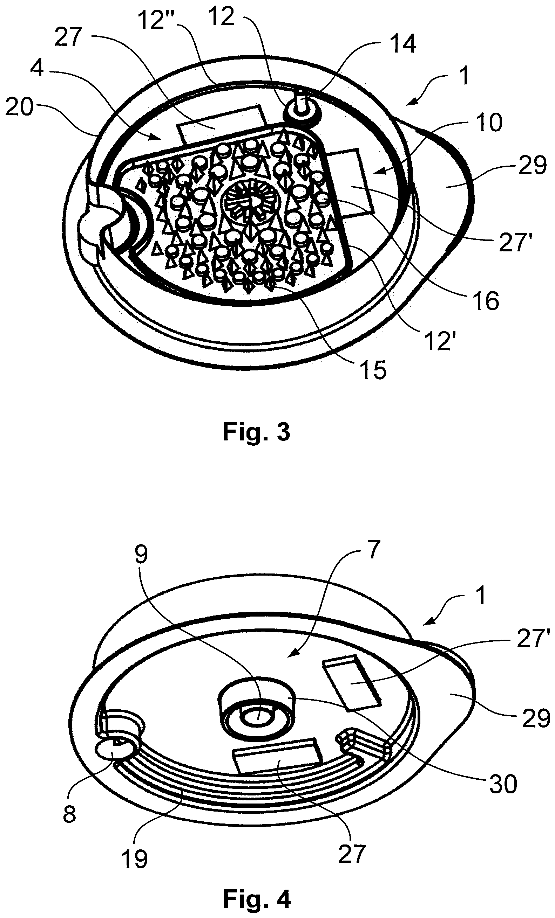

In den Figuren 3 und 4 sind die Kapsel- und Vorrichtungsseite des Adapters 1 zusätzlich noch in perspektivischer Darstellung gezeigt. Es ist zu erkennen, dass der Adapter 1 eine im Wesentlichen scheibenförmige Form hat.

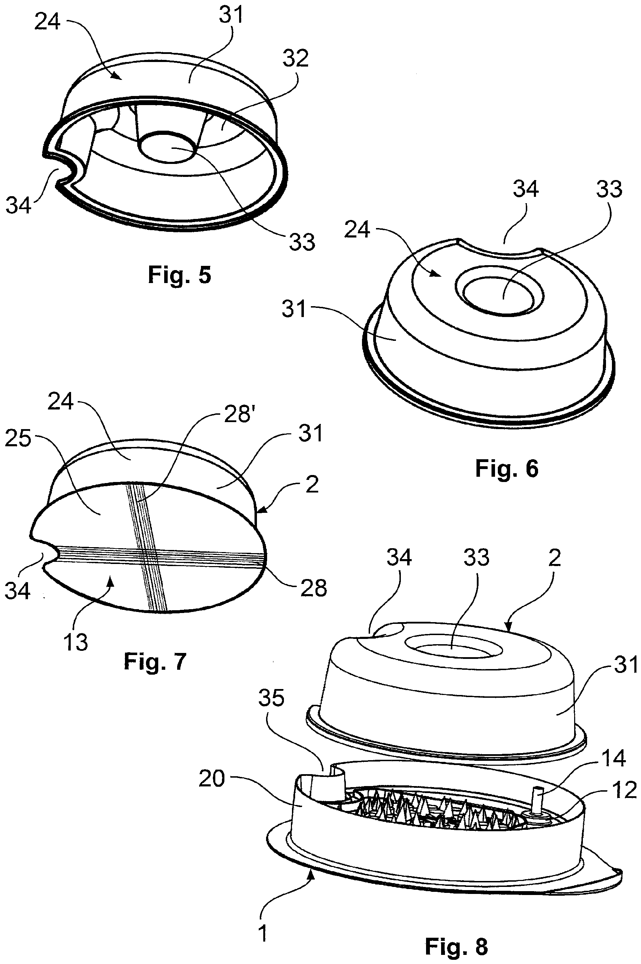

Die Figuren 5 und 6 zeigen einen Kapselkörper 24 für eine Kapsel 2, die zur Verwendung mit einem erfindungsgemässen Adapter 1 vorgesehen ist, aus zwei unterschiedlichen Perspektiven. Der Kapselkörper 24 umfasst eine Seitenwand 31 sowie einen Boden 32. Der Boden 32 weist eine kreisrunde Erhöhung 33 auf. Ferner ist die Seitenwand 31 und ein Teil des Bodens 32 mit einer Aussparung 34 versehen.

Die Figur 7 zeigt eine Kapsel 2 zur Verwendung mit einem erfindungsgemässen Adapter 1 in montiertem Zustand. Der Kapselkörper 24 ist mit einem Deckel 25 verschlossen, welcher eine Kontaktfläche 13 der Kapsel 2 bildet. Auf dem Deckel 25 sind zwei sich kreuzende Barcodes 28, 28' aufgedruckt. Der Kapselkörper 24 bildet zusammen mit dem Deckel 25 einen Aufnahmeraum zur Aufnahme einer Ausgangssubstanz zur Herstellung eines Getränkes.

In Figur 8 sind der erfindungsgemässe Adapter 1 sowie eine zum Gebrauch mit diesem vorgesehene Kapsel 2 in Zusammenschau gezeigt. Es ist zu erkennen, dass die Aussparung 34 der Kapsel 2 mit einer Einbuchtung 35 des umlaufenden Kragens 20 des Adapters 1 korrespondiert. Damit wird neben einer exakten Positionierung der Kapsel 2 auf dem Adapter 1 auch eine gewünschte Ausrichtung derselben erzielt.

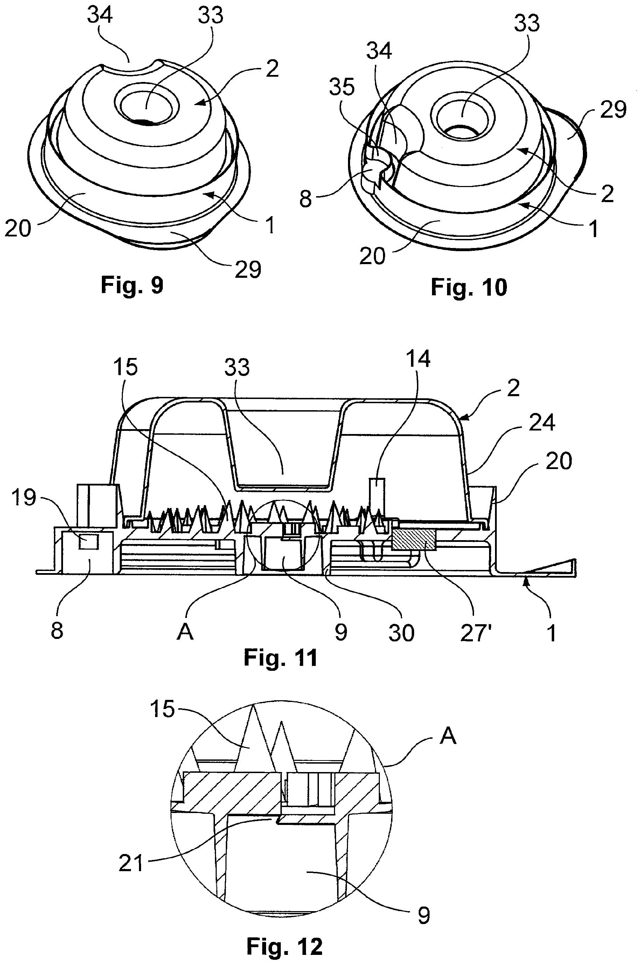

In den Figuren 9 und 10 ist die Kapsel 2 auf den Adapter 1 aufgesetzt. Insbesondere in Figur 10 ist zu erkennen, dass die Aussparung 34 der Kapsel 2 und die Einbuchtung 35 des umlaufenden Kragens des Adapters 1 auch den erforderlichen Raum für den Einlass 8 bieten.

In der Figur 11 ist eine Schnittansicht der auf den Adapter 1 aufgesetzten Kapsel 2 gezeigt. Zur besseren Übersichtlichkeit ist der Deckel 25 der Kapsel 2 weggelassen. Die Schnittebene verläuft entlang der Geraden b (vgl. Fig. 2) durch den Einlass 8, den Auslass 9 und den transparenten Bereich 27'. In der vorliegenden Darstellung ist gut zu erkennen, dass der Einlass 8 in den Kanal 19 mündet. Ebenfalls ist zu erkennen, dass der transparente Bereich 27' durch ein quaderförmiges Element aus einem transparenten Material gebildet ist, welches in eine Aussparung in Adapter 1 eingesetzt ist.

Die Figur 12 zeigt nähere Einzelheiten zum Teilbereich A der Figur 11. Es ist zu erkennen, dass die Mündung für die Flüssigkeit in den Auslass 9 als Spalt 21 ausgebildet ist. Dieser erzeugt bei der Zubereitung von Kaffeegetränken eine für einen Espresso typische Crema. Darüber hinaus erfüllt der Spalt 21 eine Ventilfunktion und kann so ein unbeabsichtigtes Nachtropfen von Flüssigkeit nach erfolgter Getränkezubereitung verhindern, wenn die Kapsel gemeinsam mit dem Adapter aus der Getränkezubereitungsvorrichtung entfernt wird. Ebenfalls ist in Figur 12 deutlich ein pyramidenförmiges Penetrationselement 15 zu erkennen.

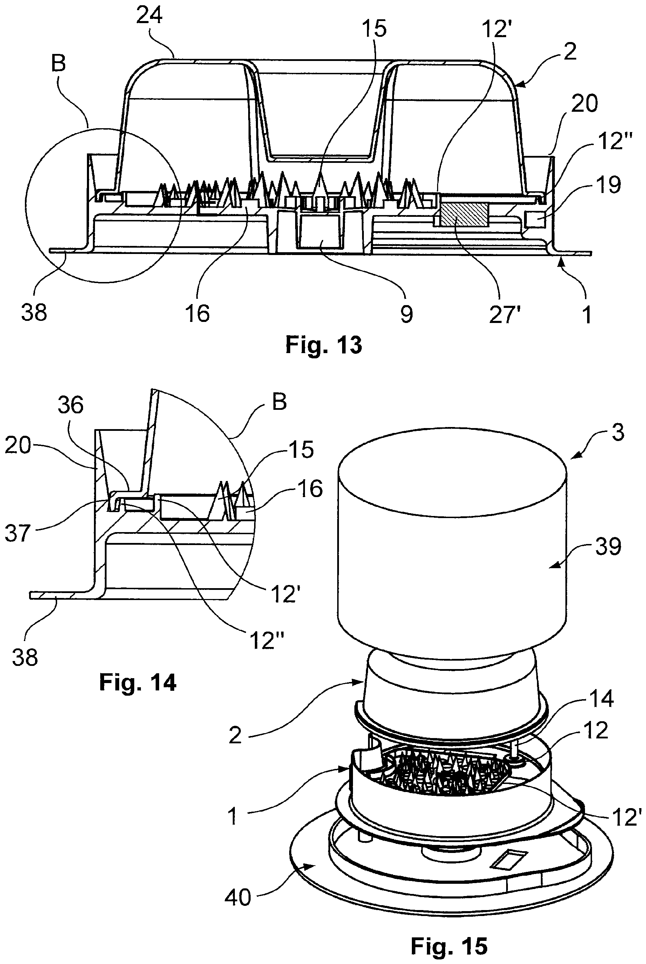

Die Figur 13 zeigt eine alternative Schnittansicht einer auf einen Adapter 1 aufgesetzten Kapsel 2 gemäss den Figuren 9 und 10. In diesem Fall verläuft die Schnittebene entlang der Geraden a, welche nahezu senkrecht zur Geraden b (vgl. Fig. 2) verläuft. Hier ist entsprechend der transparente Bereich 27' ersichtlich. Darüber hinaus ist ein weiterer Abschnitt des Kanals 19 sichtbar.

Die Figur 14 zeigt eine Vergrösserung des Teilbereichs B gemäss Figur 13. Es ist zu erkennen, dass der Kapselkörper 24 einen flanschartigen Rand 36 umfasst. Dieser weist an einem äusseren Bereich einen umlaufenden Kragen 37 auf, der im Wesentlichen parallel zur Seitenwand 31 verläuft und sich über die Kontaktfläche 13 hinaus erstreckt. Wenn die Kapsel 2 auf den Adapter 1 aufgesetzt ist, greift der Kragen 37 in eine durch den umlaufenden Kragen 20 und das Dichtungselement 12" des Adapters 1 gebildete Nut ein. Der Kragen 20 des Kapselkörpers 24 geht mit dem Adapter 1 eine Dichtverbindung ein. Gleichzeitig geht das Dichtungselement 12" mit dem Kapselkörper 24 eine Dichtverbindung ein. In den Figuren 13 und 14 ist der Deckel 25 der Kapsel 2 wegelassen. Es ist allerdings vorgesehen, einen solchen derart zentriert am flanschartigen Rand 36 des Kapselkörpers 24 anzubringen, Dass dieser nicht zwischen das Dichtungselement 12" und den Kapselkörper 24, bzw. zwischen den Kragen 37 und den Adapter 1 gerät. Es hat sich gezeigt, dass dies die Dichtwirkung signifikant reduzieren würde. Beim gezeigten Ausführungsbeispiel ist es vorgesehen, dass der Deckel 25 der Kapsel 2 zusätzlich eine Dichtverbindung mit dem Dichtelement 12' eingeht.

Figur 15 zeigt eine räumliche Zusammenschau eines erfindungsgemässen Adapters 1, einer Kapsel 2 sowie des Oberteils 39 und des Unterteils 40 eines Kapselhalters einer Getränkezubereitungsvorrichtung 3.

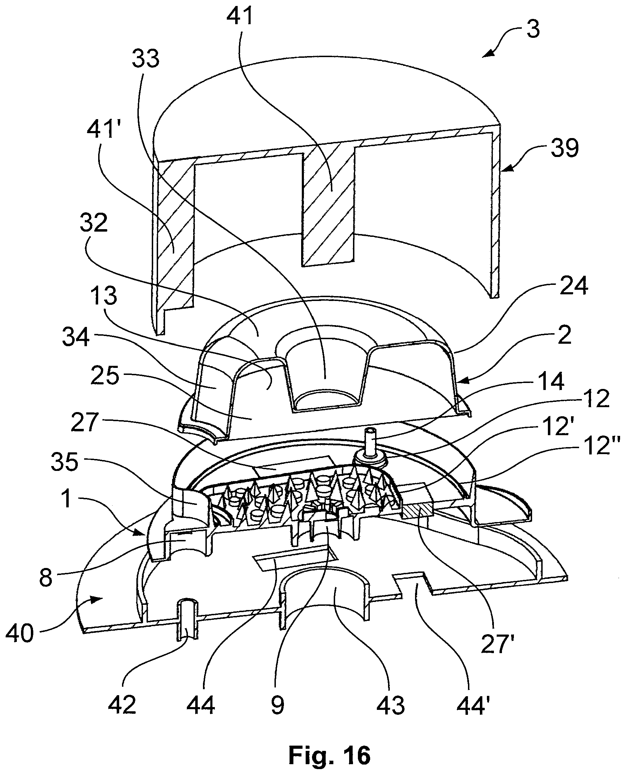

Figur 16 zeigt eine perspektivische Schnittansicht der Zusammenschau gemäss Figur 15. Es ist zu erkennen, dass der Oberteil 39 des Kapselhalters zwei Stempel 41, 41' aufweist. Der Stempel 41 greift von der Unterseite in die Erhöhung 31 des Bodens 32 der Kapsel 2 ein. Der Stempel 41' greift in die Einbuchtung 35 des umlaufenden Kragens 20 ein. Der Unterteil 40 des Kapselhalters weist einen Einlaufstutzen 42 auf, welcher in den Einlass 8 des Adapters 1 eingreift und über den eine unter Druck stehende Flüssigkeit bereitstellbar ist. Darüber hinaus weist der Unterteil 40 des Kapselhalters einen Auslaufstutzen 43 auf, in welchen der Auslass 9 des Adapters 1 eingreifen kann. Der Unterteil 40 des Kapselhalters verfügt ferner über zwei Fenster 44, 44', über welche eine Lesevorrichtung, welche Bestandteil der Getränkezubereitungsvorrichtung 3 ist, einen auf der Kontaktfläche 13 der Kapsel 2 angebrachten maschinenlesbaren Code, beispielsweise ein Barcode 28, 28', durch den Adapter 1 lesen kann.

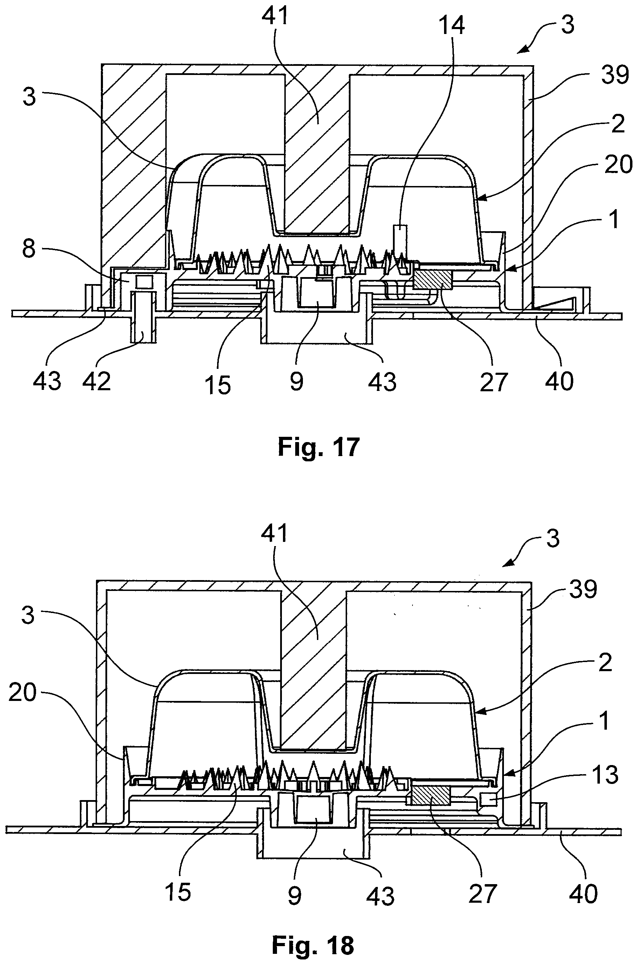

Die Figuren 17 und 18 zeigen den erfindungsgemässen Adapter 1 mit einer Kapsel 2 im Kapselhalter 39, 40 einer Getränkezubereitungsvorrichtung 3 in geschlossenem Zustand. Es ist zu erkennen, dass der flanschartige Rand 38 des Adapters 1 zwischen dem Oberteil 39 und dem Unterteil 40 des Kapselhalters eingeklemmt ist, womit dieser dichtend abgeschlossen ist. Ferner ist zu erkennen, wie der Stempel 41 auf die Unterseite der Erhöhung 33 im Kapselboden 32 wirkt. Dadurch wird die Kapsel 2 auf den Adapter 1 gepresst, womit die Dichtungselemente 12, 12', 12" sowie der umlaufende Kragen 37 gemeinsam mit der Kontaktfläche 13 der Kapsel 2 dichtend abschliessen. Ferner presst der Stempel 41' auf den Einlass 8 des Adapters 1. Dadurch wird der Übergang vom Einlaufstutzen 42 auf den Einlass 8 abgedichtet. Zur besseren Übersichtlichkeit ist in den Figuren 17 und 18 der die Kontaktfläche 13 bildende Deckel 25 weggelassen.

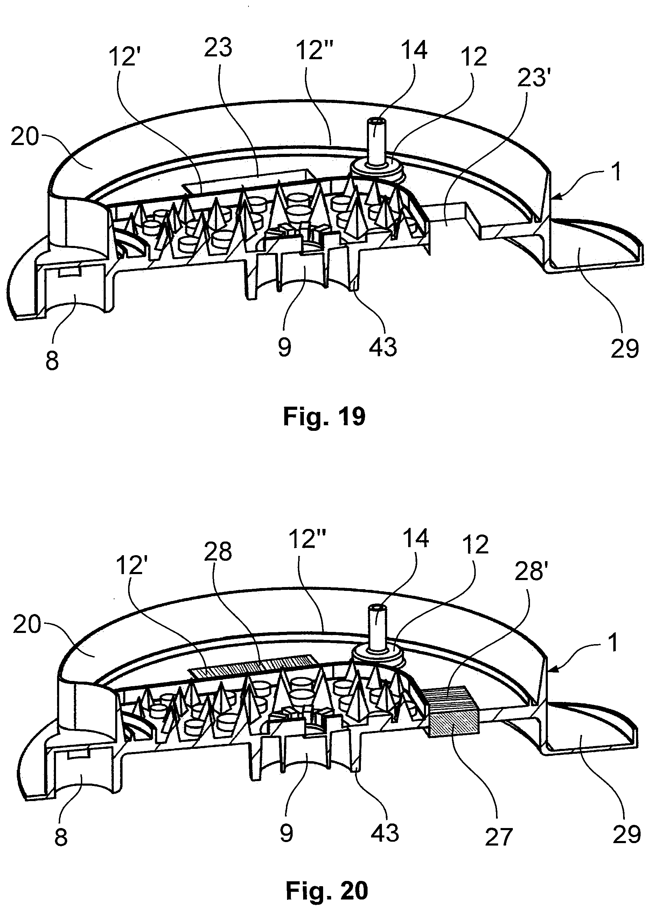

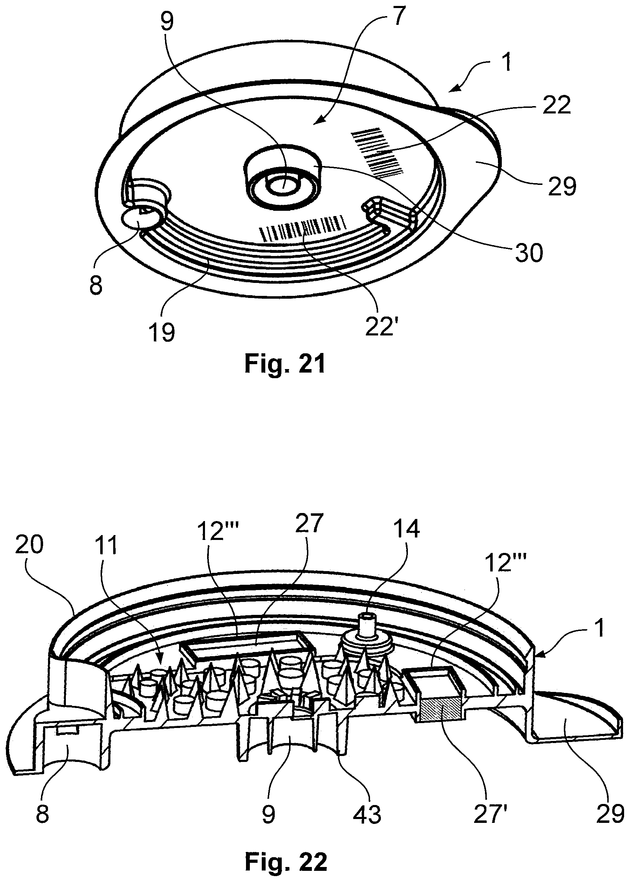

Die Figuren 19 bis 21 zeigen alternative Ausführungsformen eines erfindungsgemässen Adapters 1. Im Beispiel gemäss Figur 19 weist der Adapter 1 Fenster 23, 23' auf, durch welche ein auf der Kontaktfläche 13 der Kapsel 2 angebrachter maschinenlesbarer Code durch die Getränkezubereitungsvorrichtung 3 lesbar ist, wenn der Adapter 1 gemeinsam mit der Kapsel 2 in die Getränkezubereitungsvorrichtung 3 eingelegt ist. Das Beispiel gemäss Figur 20 zeigt einen Adapter 1, der ähnlich wie das Ausführungsbeispiel gemäss den Figuren 1 bis 18 zwei transparente Bereiche 27, 27' aufweist, durch die ein maschinenlesbarer Code lesbar ist, wenn der Adapter in die Getränkezubereitungsvorrichtung eingelegt ist. Im Gegensatz zum vorgängig diskutierten Ausführungsbeispiel (Fig. 1 bis 18) ist der maschinenlesbare Code hier allerdings nicht auf der Kapsel 2 aufgedruckt, sondern auf transparenten Bereichen 27, 27' des Adapters 1. Im Ausführungsbeispiel gemäss der Figur 21 sind zwei maschinenlesbare Codes 22, 22' direkt auf die Vorrichtungsseite 7 des Adapters 1 aufgedruckt. Bei den gezeigten Ausführungsbeispielen handelt es sich beim maschinenlesbaren Code 22 um einen 1D-Code, namentlich um einen Strichcode. Es versteht sich allerdings von selbst, dass die vorliegende Erfindung nicht auf derartige Codes beschränkt ist.

Die Figuren 22 bis 26 zeigen ein weiteres Ausführungsbeispiel eines erfindungsgemässen Adapters 1. Dieses ist dem Beispiel gemäss den Figuren 1 bis 18 verwandt. Allerdings ist um den Ableitbereich 11 kein Dichtungselement 12' angeordnet. Dafür sind die transpatenten Bereiche 27, 27' jeweils von einem Dichtungselement 12'" umsäumt. Es versteht sich allerdings von selbst, dass die vorliegende Erfindung nicht auf Adapter 1 mit Dichtungselementen 12' bzw. 12'" beschränkt ist, die entweder den Ableitbereich 11 oder die transpatenten Bereiche 27, 27' bzw. Fenster 23, 23' umsäumen. Denkbar wäre auch ein Adapter, der sowohl Dichtungselemente 12', die den Ableitbereich 11 umsäumen, als auch Dichtungselemente 12"', die transpatente Bereiche 27, 27' bzw. Fenster 23, 23' umsäumen, aufweist.

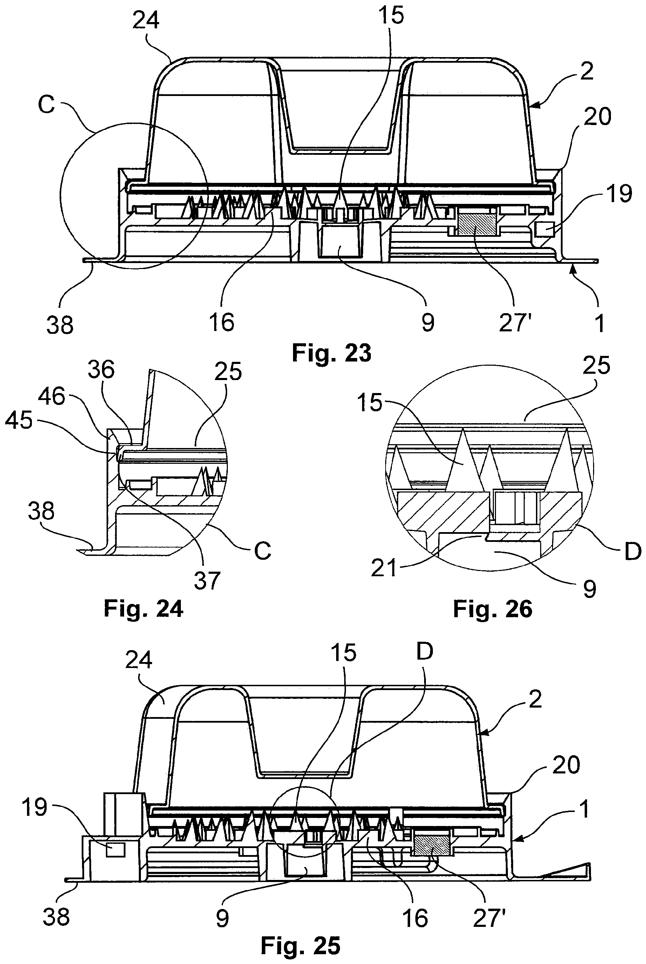

Wie insbesondere aus Figur 24 ersichtlich ist, weist beim besagten Ausführungsbeispiel der umlaufende Kragen 20 des Adapters 1 Rastmittel in Form einer Grube 45 und einer Rastnase 46 auf, mit denen der umlaufende Kragen 37 des flanschartigen Randes 36 des Kapselkörpers 24 verrastbar ist. Damit kann die Kapsel 2 in einer Bereitschaftsposition (vgl. Fig. 23-26) gehalten werden, in der die Kontaktfläche 13 der Kapsel, im vorliegenden Fall durch den Deckel 25 gebildet, vor den oben beschriebenen Penetrationselementen gehalten ist. Erst beim Einlegen der Kapsel 2 und des Adapters 1 in die Getränkezubereitungsvorrichtung 3 und Verschliessen der Vorrichtung 3 kommt es zu einer Penetration des Deckels 25.

## Patentansprüche

1. Adapter (1) zur Verwendung bei der Zubereitung eines Getränkes mit einer Kapsel (2) und einer Getränkezubereitungsvorrichtung, wobei der Adapter (1) gemeinsam mit der Kapsel (2) in die Getränkezubereitungvorrichtung (3) einlegbar ist, wobei der Adapter (1) eine Kapselseite (4) aufweist, an welcher Mittel (5) zum Einleiten einer Flüssigkeit in die Kapsel (2) sowie Mittel (6) zum Ableiten einer Flüssigkeit aus der Kapsel (2) angeordnet sind, wobei der Adapter (1) eine Vorrichtungsseite (7) aufweist, an welcher ein Einlass (8) für eine von der Getränkezubereitungsvorrichtung bereitgestellte Flüssigkeit sowie ein Auslass (9) angeordnet sind, wobei der Einlass (8) mit den Mitteln (5) zum Einleiten der Flüssigkeit in die Kapsel (2) und der Auslass (9) mit den Mitteln (6) zum Ableiten der Flüssigkeit aus der Kapsel (2) jeweils fluidmässig verbunden sind, wobei die Mittel (5) zum Einleiten der Flüssigkeit in die Kapsel (2) und die Mittel (6) zum Ableiten der Flüssigkeit aus der Kapsel (2) derart angeordnet sind, dass das Einleiten der Flüssigkeit in die Kapsel (2) und das Ausleiten der Flüssigkeit aus der Kapsel (2) an nur einer Seite der Kapsel (2) erfolgen.

2. Adapter (1) nach Anspruch 1, wobei die Kapselseite (4) einen Einleitbereich (10), in welchem die Mittel (5) zum Einleiten einer Flüssigkeit in die Kapsel (2) angeordnet sind, und/oder einen Ableitbereich (11), in welchem die Mittel (6) zum Ableiten der Flüssigkeit aus der Kapsel (2) angeordnet sind, aufweist.

3. Adapter (1) nach Anspruch 2, wobei der Einleitbereich (10) und/oder der Ableitbereich (11) durch zumindest ein Dichtungselement (12) begrenzt ist/sind, durch welches mit einer Kontaktfläche (13) der Kapsel (2) zumindest eine Dichtverbindung herstellbar ist.

4. Adapter (1) nach Anspruch 3, wobei der Einleitbereich (10) und der Ableitbereich (11) durch zumindest ein Dichtungselement (12) voneinander getrennt sind, durch welches mit der Kontaktfläche (13) der Kapsel (2) eine Dichtverbindung herstellbar ist.

5. Adapter (1) nach einem der Ansprüche 1 bis 4, wobei die Mittel (5) zum Einleiten der Flüssigkeit in die Kapsel (2) als zumindest ein Penetrationselement zum Penetrieren der Kontaktfläche (13) der Kapsel (2) ausgebildet sind.

6. Adapter (1) nach Anspruch 5, wobei die Mittel (5) zum Einleiten der Flüssigkeit in die Kapsel (2) als zumindest eine Hohlkanüle (14) ausgebildet sind.

7. Adapter (1) nach Anspruch 5 oder 6, wobei das zumindest eine Penetrationselement derart ausgebildet ist, dass die Kontaktfläche (13) der Kapsel (2) beim Einlegen der Kapsel (2) und des Adapters (1) in die Getränkezubereitungsvorrichtung (3) und Verschliessen der Vorrichtung (3) mit dem zumindest einen Penetrationselement penetrierbar ist.

8. Adapter (1) nach einem der Ansprüche 1 bis 7, wobei die Mittel (6) zum Ableiten der Flüssigkeit aus der Kapsel (2) als zumindest ein, vorzugsweise mehrere, Penetrationselement/e, insbesondere ausgewählt aus einer Liste bestehend aus Pyramiden (15) und Kegeln, zum Penetrieren der Kontaktfläche (13) der Kapsel (2) ausgebildet sind.

9. Adapter (1) nach einem der Ansprüche 1 bis 8, wobei die Mittel (6) zum Ableiten der Flüssigkeit aus der Kapsel (2), insbesondere zusätzlich, als zumindest ein, vorzugsweise mehrere, Stützelement/e, insbesondere ausgewählt aus einer Liste bestehend aus Pyramiden, Kegeln, Pyramidenstümpfen, Kegelstümpfen (16), Zylindern und Prismen, ausgebildet sind, wobei das zumindest eine Stützelement derart ausgebildet ist, dass die Kontaktfläche (13) der Kapsel (2) nach dem Einlegen derselben und des Adapters (1) in die Getränkezubereitungvorrichtung (3) auf dem Stützelement aufliegt, und durch einen während einer Getränkezubereitung aufgebauten Kapselinnendruck zum Bersten bringbar ist.

10. Adapter (1) nach einem der Ansprüche 1 bis 9, wobei die Mittel (6) zum Ableiten der Flüssigkeit aus der Kapsel (2), der Auslass (9) und gegebenenfalls auch der Ableitbereich (11) in dessen Zentrum (17) angeordnet sind.

11. Adapter (1) nach einem der Ansprüche 1 bis 10, wobei die Mittel (5) zum Einleiten einer Flüssigkeit in die Kapsel (2), der Einlass (8) und gegebenenfalls auch der Einleitbereich (10) in einem Randbereich (18) angeordnet sind.

12. Adapter (1) nach einem der Ansprüche 1 bis 11, wobei die Kapselseite (4) eine Struktur zum Festhalten und/oder Positionieren der Kapsel (2) aufweist.

13. Adapter (1) nach Anspruch 12, wobei die Struktur zum Festhalten und/oder Positionieren der Kapsel (2) in Form eines umlaufenden Kragens (20) ausgestaltet ist, wobei der Kragen (20) vorzugsweise eine Einbuchtung (35) zum Eingreifen in eine Aussparung (34) der Kapsel (2) umfasst.

14. Adapter (1) nach einem der Ansprüche 12 oder 13, wobei die Struktur Rastmittel, insbesondere in Form einer Grube (45) und/oder einer Rastnase (46) aufweist, mit denen die Kapsel (2), insbesondere an einem flanschartigen Rand (36), vorzugsweise an einem umlaufenden Kragen (37), verrastbar ist.

15. Adapter (1) nach einem der Ansprüche 1 bis 13, wobei die Vorrichtungsseite (7) zumindest einen maschinenlesbaren Code (22) aufweist, welcher von einer Getränkezubereitungsvorrichtung (3), insbesondere zum Einstellen von deren Betriebsparametern, lesbar ist, wenn der Adapter (1) gemeinsam mit der Kapsel (2) in die Getränkezubereitungsvorrichtung (3) eingelegt ist.

16. Adapter (1) nach einem der Ansprüche 1 bis 13, wobei die Kapselseite (4) zumindest einen maschinenlesbaren Code (22) aufweist, welcher von einer Getränkezubereitungsvorrichtung (3), insbesondere zum Einstellen von deren Betriebsparametern, lesbar ist, wobei der Adapter (1) insbesondere zumindest teilweise derart transparent ist, dass der maschinenlesbare Code (22) von der Getränkezubereitungsvorrichtung (3) lesbar ist, wenn der Adapter (1) gemeinsam mit der Kapsel (2) in die Getränkezubereitungsvorrichtung (3) eingelegt ist.

17. Adapter (1) nach einem der Ansprüche 1 bis 13, wobei der Adapter (1) zumindest ein Fenster (23) aufweist, durch welches ein auf der Kontaktfläche (13) der Kapsel (2) angebrachter maschinenlesbarer Code (22) durch die Getränkezubereitungsvorrichtung (3), insbesondere zum Einstellen deren Betriebsparameter, lesbar ist, wenn der Adapter (1) gemeinsam mit der Kapsel (2) in die Getränkezubereitungsvorrichtung (3) eingelegt ist.

18. Adapter (1) nach einem der Ansprüche 1 bis 13, wobei der Adapter (1) zumindest bereichsweise derart transparent ausgebildet ist, dass ein auf der Kontaktfläche (13) der Kapsel (2) angebrachter maschinenlesbarer Code (22) durch die Getränkezubereitungsvorrichtung (3), insbesondere zum Einstellen von deren Betriebsparametern, lesbar ist, wenn der Adapter (1) gemeinsam mit der Kapsel (2) in die Getränkezubereitungsvorrichtung (3) eingelegt ist.

19. Adapter (1) nach einem der Ansprüche 14 bis 17, wobei der zumindest eine maschinenlesbare Code (22), das zumindest eine Fenster (23) oder der zumindest eine transparente Bereich (27) auf der Vorrichtungsseite (7) derart angeordnet ist, dass eine Linie (a), die den Einlass (8) mit dem Zentrum des maschinenlesbaren Codes (22), des Fensters (23) oder des transparenten Bereiches (27) verbindet, und eine Linie (b), die Einlass (8) mit dem Auslass (9) verbindet, durch einen minimalen Winkelabstand von 70° getrennt sind.

20. Set umfassend einen Adapter (1) nach einem der Ansprüche 1 bis 16 und mindestens eine Kapsel (2), insbesondere eine Kapsel zur Zubereitung eines Getränkes mit dem Adapter (1) und einer Getränkezubereitungsvorrichtung (3), wobei die Kapsel (2) gemeinsam mit dem Adapter (1) in die Getränkezubereitungvorrichtung (3) einlegbar ist, wobei die Kapsel (2) einen Kapselkörper (24) mit einem flanschartigen Rand (36) umfasst, an welchem ein Deckel (25) angebracht ist, wobei der Deckel (25) die Kontaktfläche (13) der Kapsel (2) bildet und den Kapselkörper (24), insbesondere hermetisch, verschliesst, wobei der flanschartige Rand (36) einen umlaufenden Kragen (37) aufweist, welcher sich über die Kontaktfläche (13) hinaus erstreckt.

21. Set umfassend einen Adapter (1) nach Anspruch 17 oder 18 und mindestens eine Kapsel (2), insbesondere eine Kapsel zur Zubereitung eines Getränkes mit dem Adapter (1) und einer Getränkezubereitungsvorrichtung (3), wobei die Kapsel (2) gemeinsam mit dem Adapter (1) in die Getränkezubereitungvorrichtung (3) einlegbar ist, wobei die Kapsel (2) einen Kapselkörper (24) mit einem flanschartigen Rand (36) umfasst, an welchem ein Deckel (25) angebracht ist, wobei der Deckel (25) die Kontaktfläche (13) der Kapsel (2) bildet und den Kapselkörper (24), insbesondere hermetisch, verschliesst, wobei der flanschartige Rand (36) einen umlaufenden Kragen (37) aufweist, welcher sich über die Kontaktfläche (13) hinaus erstreckt, wobei die Kapsel (2) an der Kontaktfläche (13) einen maschinenlesbaren Code (22) aufweist.

22. Set umfassend einen Adapter (1) nach Anspruch 12 oder 13 und mindestens eine Kapsel (2), insbesondere eine Kapsel zur Zubereitung eines Getränkes mit dem Adapter (1) und einer Getränkezubereitungsvorrichtung (3), wobei die Kapsel (2) gemeinsam mit dem Adapter (1) in die Getränkezubereitungvorrichtung (3) einlegbar ist, wobei die Kapsel (2) einen Kapselkörper (24) mit einem flanschartigen Rand (36) umfasst, an welchem ein Deckel (25) angebracht ist, wobei der Deckel (25) die Kontaktfläche (13) der Kapsel (2) bildet und den Kapselkörper (24), insbesondere hermetisch, verschliesst, wobei der flanschartige Rand (36) einen umlaufenden Kragen (37) aufweist, welcher sich über die Kontaktfläche (13) hinaus erstreckt, wobei der Adapter (1) an der Kapsel (2) vormontiert ist.

23. Getränkezubereitungssystem umfassend ein Set nach einem der Ansprüche 20 bis 22 sowie eine Getränkezubereitungsvorrichtung (3).

## Claims

1. Adapter (1) for use in the preparation of a beverage by means of a capsule (2) and a beverage preparation device, wherein the adapter (1) can be placed together with the capsule (2) into the beverage preparation device (3), wherein the adapter (1) has a capsule side (4) on which a means (5) for introducing a liquid into the capsule (2) and means (6) for discharging a liquid from the capsule (2) are arranged, wherein the adapter (1) has a device side (7) on which an inlet (8) for a liquid provided by the beverage preparation device and also an outlet (9) are arranged, wherein the inlet (8) is fluidically connected to the means (5) for introducing the liquid into the capsule (2) and the outlet (9) is fluidically connected to the means (6) for discharging the liquid from the capsule (2), wherein the means (5) for introducing the liquid into the capsule (2) and the means (6) for discharging the liquid from the capsule (2) are arranged in such a manner that the introduction of the liquid into the capsule (2) and the discharging of the liquid from the capsule (2) take place on only one side of the capsule (2) .

2. Adapter (1) according to Claim 1, wherein the capsule side (4) has an introducing region (10), in which the means (5) for introducing a liquid into the capsule (2) are arranged, and/or a discharging region (11), in which the means (6) for discharging the liquid from the capsule (2) are arranged.

3. Adapter (1) according to Claim 2, wherein the introducing region (10) and/or the discharging region (11) are/is bounded by at least one sealing element (12) by means of which at least one tight connection can be produced with a contact surface (13) of the capsule (2).

4. Adapter (1) according to Claim 3, wherein the introducing region (10) and the discharging region (11) are separated from each other by at least one sealing element (12) by means of which a tight connection can be produced with the contact surface (13) of the capsule (2).

5. Adapter (1) according to one of Claims 1 to 4, wherein the means (5) for introducing the liquid into the capsule (2) are designed as at least one penetration element for penetrating the contact surface (13) of the capsule (2).

6. Adapter (1) according to Claim 5, wherein the means (5) for introducing the liquid into the capsule (2) are designed as at least one hollow cannula (14).

7. Adapter (1) according to Claim 5 or 6, wherein the at least one penetration element is designed in such a manner that, when the capsule (2) and the adapter (1) are placed into the beverage preparation device (3) and the device (3) is closed, the contact surface (13) of the capsule (2) can be penetrated by the at least one penetration element.

8. Adapter (1) according to one of Claims 1 to 7, wherein the means (6) for discharging the liquid from the capsule (2) are designed as at least one, preferably a plurality of, penetration element(s), in particular selected from a list consisting of pyramids (15) and cones, for penetrating the contact surface (13) of the capsule (2).

9. Adapter (1) according to one of Claims 1 to 8, wherein the means (6) for discharging the liquid from the capsule (2) are designed, in particular additionally, as at least one, preferably a plurality of, supporting element(s), in particular selected from a list consisting of pyramids, cones, truncated pyramids, truncated cones (16), cylinders and prisms, wherein the at least one supporting element is designed in such a manner that, after the capsule (2) and the adapter (1) are placed into the beverage preparation device (3), the contact surface (13) of the capsule (2) rests on the supporting element, and, by means of an internal pressure of the capsule that is built up during preparation of a beverage, can be brought to burst.

10. Adapter (1) according to one of Claims 1 to 9, wherein the means (6) for discharging the liquid from the capsule (2), the outlet (9) and optionally also the discharging region (11) are arranged in the center (17) of the adapter.

11. Adapter (1) according to one of Claims 1 to 10, wherein the means (5) for introducing a liquid into the capsule (2), the inlet (8) and optionally also the introducing region (10) are arranged in an edge region (18) .

12. Adapter (1) according to one of Claims 1 to 11, wherein the capsule side (4) has a structure for securing and/or positioning the capsule (2).

13. Adapter (1) according to Claim 12, wherein the structure for securing and/or positioning the capsule (2) is designed in the form of an encircling collar (20), wherein the collar (20) preferably comprises an indentation (35) for engaging in a recess (34) of the capsule (2).

14. Adapter (1) according to either of Claims 12 and 13, wherein the structure has latching means, in particular in the form of a groove (45) and/or a latching lug (46), to which the capsule (2) can be latched, in particular at a flange-like edge (36), preferably at an encircling collar (37).

15. Adapter (1) according to one of Claims 1 to 13, wherein the device side (7) has at least one machine-readable code (22), which can be read by a beverage preparation device (3), in particular for setting the operating parameters thereof, when the adapter (1) is placed together with the capsule (2) into the beverage preparation device (3).

16. Adapter (1) according to one of Claims 1 to 13, wherein the capsule side (4) has at least one machine-readable code (22), which can be read by a beverage preparation device (3), in particular for setting the operating parameters thereof, wherein the adapter (1) is in particular at least partially transparent in such a manner that the machine-readable code (22) can be read by the beverage preparation device (3) when the adapter (1) is placed together with the capsule (2) into the beverage preparation device (3) .

17. Adapter (1) according to one of Claims 1 to 13, wherein the adapter (1) has at least one window (23) through which a machine-readable code (22) arranged on the contact surface (13) of the capsule (2) can be read by the beverage preparation device (3), in particular for setting the operating parameters thereof, when the adapter (1) is placed together with the capsule (2) into the beverage preparation device (3).

18. Adapter (1) according to one of Claims 1 to 13, wherein the adapter (1) is formed transparently at least in regions such that a machine-readable code (22) arranged on the contact surface (13) of the capsule (2) can be read by the beverage preparation device (3), in particular for setting the operating parameters thereof, when the adapter (1) is placed together with the capsule (2) into the beverage preparation device (3) .

19. Adapter (1) according to one of Claims 14 to 17, wherein the at least one machine-readable code (22), the at least one window (23) or the at least one transparent region (27) is arranged on the device side (7) in such a manner that a line (a) which connects the inlet (8) to the center of the machine-readable code (22), the window (23) or the transparent region (27), and a line (b) which connects the inlet (8) to the outlet (9), are separated by a minimum angle spacing of 70°.

20. Set comprising an adapter (1) according to one of Claims 1 to 16 and at least one capsule (2), in particular a capsule for preparing a beverage with an adapter (1) and a beverage preparation device (3), wherein the capsule (2) can be placed together with the adapter (1) into the beverage preparation device (3), wherein the capsule (2) comprises a capsule body (24) with a flange-like edge (36) to which a cover (25) is attached, wherein the cover (25) forms the contact surface (13) of the capsule (2) and closes the capsule body (24), in particular hermetically, wherein the flange-like edge (36) has an encircling collar (37) which extends beyond the contact surface (13).

21. Set comprising an adapter (1) according to Claim 17 or 18 and at least one capsule (2), in particular a capsule, for preparing a beverage with the adapter (1) and a beverage preparation device (3), wherein the capsule (2) can be placed together with the adapter (1) into the beverage preparation device (3), wherein the capsule (2) comprises a capsule body (24) with a flange-like edge (36) to which a cover (25) is attached, wherein the cover (25) forms the contact surface (13) of the capsule (2) and closes the capsule body (24), in particular hermetically, wherein the flange-like edge (36) has an encircling collar (37) which extends beyond the contact surface (13), wherein the capsule (2) has a machine-readable code (22) on the contact surface (13).

22. Set comprising an adapter (1) according to Claim 12 or 13 and at least one capsule (2), in particular a capsule for preparing a beverage with the adapter (1) and a beverage preparation device (3), wherein the capsule (2) can be placed together with the adapter (1) into the beverage preparation device (3), wherein the capsule (2) comprises a capsule body (24) with a flange-like edge (36) to which a cover (25) is attached, wherein the cover (25) forms the contact surface (13) of the capsule (2) and closes the capsule body (24), in particular hermetically, wherein the flange-like edge (36) has an encircling collar (37) which extends beyond the contact surface (13), wherein the adapter (1) is preassembled on the capsule (2).

23. Beverage preparation system comprising a set according to one of Claims 20 to 22 and a beverage preparation device (3).

## Revendications

1. Adaptateur (1) pour l'utilisation lors de la préparation d'une boisson, comprenant une capsule (2) et un dispositif de préparation de boissons, l'adaptateur (1) pouvant être introduit conjointement avec la capsule (2) dans le dispositif de préparation de boissons (3), l'adaptateur (1) présentant un côté capsule (4) au niveau duquel sont disposés des moyens (5) pour introduire un liquide dans la capsule (2) ainsi que des moyens (6) pour évacuer un liquide hors de la capsule (2), l'adaptateur (1) présentant un côté dispositif (7) au niveau duquel est disposée une entrée (8) pour un liquide fourni par le dispositif de préparation de boissons ainsi qu'une sortie (9), l'entrée (8) étant connectée fluidiquement aux moyens (5) pour introduire le liquide dans la capsule (2) et respectivement la sortie (9) étant connectée fluidiquement aux moyens (6) pour évacuer le liquide hors de la capsule (2), les moyens (5) pour introduire le liquide dans la capsule (2) et les moyens (6) pour évacuer le liquide hors de la capsule (2) étant disposés de telle sorte que l'introduction du liquide dans la capsule (2) et l'évacuation du liquide hors de la capsule (2) ne s'effectuent que d'un seul côté de la capsule (2).

2. Adaptateur (1) selon la revendication 1, dans lequel le côté capsule (4) présente une région d'introduction (10) dans laquelle sont disposés les moyens (5) pour introduire un liquide dans la capsule (2) et/ou une région d'évacuation (11) dans laquelle sont disposés les moyens (6) pour évacuer le liquide hors de la capsule (2).

3. Adaptateur (1) selon la revendication 2, dans lequel la région d'introduction (10) et/ou la région d'évacuation (11) est/sont limitée(s) par au moins un élément d'étanchéité (12) par lequel au moins une connexion étanche peut être établie avec une surface de contact (13) de la capsule (2) .

4. Adaptateur (1) selon la revendication 3, dans lequel la région d'introduction (10) et la région d'évacuation (11) sont séparées l'une de l'autre par au moins un élément d'étanchéité (12) par lequel une connexion étanche peut être établie avec la surface de contact (13) de la capsule (2).

5. Adaptateur (1) selon l'une quelconque des revendications 1 à 4, dans lequel les moyens (5) pour introduire le liquide dans la capsule (2) sont réalisés sous forme d'au moins un élément de perçage pour percer la surface de contact (13) de la capsule (2).

6. Adaptateur (1) selon la revendication 5, dans lequel les moyens (5) pour introduire le liquide dans la capsule (2) sont réalisés sous forme d'au moins une canule creuse (14).

7. Adaptateur (1) selon la revendication 5 ou 6, dans lequel l'au moins un élément de perçage est réalisé de telle sorte que la surface de contact (13) de la capsule (2), lors de l'introduction de la capsule (2) et de l'adaptateur (1) dans le dispositif de préparation de boissons (3) et de la fermeture du dispositif (3), puisse être percée avec l'au moins un élément de perçage.

8. Adaptateur (1) selon l'une quelconque des revendications 1 à 7, dans lequel les moyens (6) pour évacuer le liquide hors de la capsule (2) sont réalisés sous forme d'au moins un, de préférence sous forme de plusieurs, éléments de perçage, en particulier choisis dans une liste constituée de pyramides (15) et de cônes, pour percer la surface de contact (13) de la capsule (2) .

9. Adaptateur (1) selon l'une quelconque des revendications 1 à 8, dans lequel les moyens (6) pour évacuer le liquide hors de la capsule (2), sont réalisés notamment en outre sous forme d'au moins un, de préférence de plusieurs, éléments de support, en particulier choisis dans une liste constituée de pyramides, de cônes, de troncs de pyramide, de troncs de cône (16), de cylindres et de prismes, l'au moins un élément de support étant réalisé de telle sorte que la surface de contact (13) de la capsule (2), après son introduction et l'introduction de l'adaptateur (1) dans le dispositif de préparation de boissons (3), repose sur l'élément de support, et puisse être amenée à éclater par une pression à l'intérieur de la capsule produite pendant la préparation de la boisson.

10. Adaptateur (1) selon l'une quelconque des revendications 1 à 9, dans lequel les moyens (6) pour évacuer le liquide hors de la capsule (2), la sortie (9) et éventuellement aussi la région d'évacuation (11) sont disposés dans le centre (17) de celui-ci.

11. Adaptateur (1) selon l'une quelconque des revendications 1 à 10, dans lequel les moyens (5) pour introduire un liquide dans la capsule (2), l'entrée (8) et éventuellement également la région d'introduction (10) sont disposés dans une région de bord (18).

12. Adaptateur (1) selon l'une quelconque des revendications 1 à 11, dans lequel le côté capsule (4) présente une structure pour fixer et/ou positionner la capsule (2).

13. Adaptateur (1) selon la revendication 12, dans lequel la structure pour fixer et/ou positionner la capsule (2) est configurée sous la forme d'un col périphérique (20), le col (20) comprenant de préférence un renflement (35) pour l'engagement dans un évidement (34) de la capsule (2).

14. Adaptateur (1) selon l'une quelconque des revendications 12 et 13, dans lequel la structure présente des moyens d'encliquetage, en particulier sous la forme d'un creux (45) et/ou d'un ergot d'encliquetage (46), avec lesquels la capsule (2), en particulier au niveau d'un bord de type bride (36), peut de préférence être encliquetée au niveau d'un col périphérique (37).

15. Adaptateur (1) selon l'une quelconque des revendications 1 à 13, dans lequel le côté dispositif (7) présente au moins un code (22) lisible par machine, qui peut être lu par un dispositif de préparation de boissons (3), en particulier pour l'ajustement de ses paramètres de fonctionnement, lorsque l'adaptateur (1) est introduit conjointement avec la capsule (2) dans le dispositif de préparation de boissons (3).

16. Adaptateur (1) selon l'une quelconque des revendications 1 à 13, dans lequel le côté capsule (4) présente au moins un code (22) lisible par machine, qui peut être lu par un dispositif de préparation de boissons (3), en particulier pour l'ajustement de ses paramètres de fonctionnement, l'adaptateur (1) étant notamment au moins en partie transparent de telle sorte que le code (22) lisible par machine puisse être lu par le dispositif de préparation de boissons (3) lorsque l'adaptateur (1) est introduit conjointement avec la capsule (2) dans le dispositif de préparation de boissons (3).

17. Adaptateur (1) selon l'une quelconque des revendications 1 à 13, l'adaptateur (1) présentant au moins une fenêtre (23) à travers laquelle un code (22) lisible par machine, appliqué sur la surface de contact (13) de la capsule (2), peut être lu par le dispositif de préparation de boissons (3), en particulier pour l'ajustement de ses paramètres de fonctionnement, lorsque l'adaptateur (1) est introduit conjointement avec la capsule (2) dans le dispositif de préparation de boissons (3).

18. Adaptateur (1) selon l'une quelconque des revendications 1 à 13, l'adaptateur (1) étant réalisé au moins en partie de manière transparente de telle sorte qu'un code (22) lisible par machine, appliqué sur la surface de contact (13) de la capsule (2), puisse être lu par le dispositif de préparation de boissons (3), en particulier pour l'ajustement de ses paramètres de fonctionnement, lorsque l'adaptateur (1) est introduit conjointement avec la capsule (2) dans le dispositif de préparation de boissons (3).

19. Adaptateur (1) selon l'une quelconque des revendications 14 à 17, dans lequel l'au moins un code (22) lisible par machine, l'au moins une fenêtre (23) ou l'au moins une région transparente (27) sur le côté dispositif (7) est disposé(e) de telle sorte qu'une ligne (a) qui relie l'entrée (8) au centre du code (22) lisible par machine, de la fenêtre (23) ou de la région transparente (27), et qu'une ligne (b) qui relie l'entrée (8) à la sortie (9), soient séparées d'une distance angulaire minimale de 70°.

20. Ensemble comprenant un adaptateur (1) selon l'une quelconque des revendications 1 à 16 et au moins une capsule (2), en particulier une capsule pour la préparation d'une boisson avec l'adaptateur (1) et un dispositif de préparation de boissons (3), la capsule (2), conjointement avec l'adaptateur (1), pouvant être introduite dans le dispositif de préparation de boissons (3), la capsule (2) comprenant un corps de capsule (24) avec un bord de type bride (36) au niveau duquel est monté un couvercle (25), le couvercle (25) formant la surface de contact (13) de la capsule (2) et fermant le corps de capsule (24), notamment de manière hermétique, le bord de type bride (36) présentant un col périphérique (37) qui s'étend au-delà de la surface de contact (13).

21. Ensemble comprenant un adaptateur (1) selon la revendication 17 ou 18 et au moins une capsule (2), en particulier une capsule pour la préparation d'une boisson avec l'adaptateur (1) et un dispositif de préparation de boissons (3), la capsule (2), conjointement avec l'adaptateur (1), pouvant être introduite dans le dispositif de préparation de boissons (3), la capsule (2) comprenant un corps de capsule (24) avec un bord de type bride (36) au niveau duquel est monté un couvercle (25), le couvercle (25) formant la surface de contact (13) de la capsule (2) et fermant le corps de capsule (24), notamment de manière hermétique, le bord de type bride (36) présentant un col périphérique (37) qui s'étend au-delà de la surface de contact (13), la capsule (2) présentant au niveau de la surface de contact (13) un code (22) lisible par machine.

22. Ensemble comprenant un adaptateur (1) selon la revendication 12 ou 13 et au moins une capsule (2), en particulier une capsule pour la préparation d'une boisson avec l'adaptateur (1) et un dispositif de préparation de boissons (3), la capsule (2), conjointement avec l'adaptateur (1), pouvant être introduite dans le dispositif de préparation de boissons (3), la capsule (2) comprenant un corps de capsule (24) avec un bord de type bride (36) au niveau duquel est monté un couvercle (25), le couvercle (25) formant la surface de contact (13) de la capsule (2) et fermant le corps de capsule (24), notamment de manière hermétique, le bord de type bride (36) présentant un col périphérique (37) qui s'étend au-delà de la surface de contact (13), l'adaptateur (1) étant prémonté sur la capsule (2) .

23. Système de préparation de boissons comprenant un ensemble selon l'une quelconque des revendications 20 à 22 ainsi qu'un dispositif de préparation de boissons (3).
